# FASCICULE DE BREVET EUROPEEN

(11) **EP 2 026 627 B1**
(45) Date de publication et mention de la délivrance du brevet: **16.02.2011**
(21) Numéro de dépôt: 08161069.3
(22) Date de dépôt: 24.07.2008
(51) Int. Cl.: H04W 76/06

(54) **Procédé de gestion du changement de ressources radio affectées à un terminal mobile dans un système cellulaire**
Verfahren zur Steuerung von zur einen mobilen Endgerät zugeteilten Funkbetriebsmitteln in einem zellularen System
Method of change management of the radio resources allocated to a mobile terminal in a cellular system

(30) Priorité: 09.08.2007 FR 0757018
(43) Date de publication de la demande: 18.02.2009
(73) Titulaire: Alcatel Lucent, 75008 Paris (FR)
(72) Inventeur: Godin, Philippe, 78220, VIROFLAY (FR); Cayla, Stéphane, 78220, VIROFLAY (FR); De Lannoy, Arnaud, 78000, VERSAILLES (FR)
(74) Mandataire: Ameline, Jean-Paul B.C.

(56) Documents cités:
- WO-A-01/39525
- GB-A- 2 427 788
- US-B1- 7 181 221

## Description

La présente invention concerne la gestion de la mobilité d'un terminal mobile en communication dans un système cellulaire, et plus particulièrement les procédures de transfert de liens de communication radio entre cellules.

Un tel transfert est couramment appelé «handover» intercellulaire. On distingue le handover rigide (« hard handover», ou HHO), qui procède par basculement instantané de la communication de la station de base d'une première vers celle d'une seconde cellule, et le handover en douceur (« soft handover », ou SHO), que supportent certains systèmes et dans lequel il existe une phase plus ou moins longue où le mobile communique simultanément avec les stations de base.

Le système de troisième génération UMTS (« Universal Mobile Telecommunication System ») utilise une technique d'accès multiple à répartition par codes à large bande (W-CDMA, « Wideband Code-Division Multiple Access»), ce qui lui permet de supporter le HHO et le SHO. Son évolution, dite LTE (« Long Term Evolution) supporte seulement le HHO,

Les procédures de handover sont exécutées dans les systèmes cellulaires, de façon automatique en général, de manière à assurer au mobile en mode connecté, c'est-à-dire ayant une communication en cours, une qualité de lien radio suffisamment bonne pour que la communication puisse être poursuivie dans des conditions favorables. D'autres critères de handover existent également, en se basant sur des considérations non directement, liées aux conditions de propagation, comme par exemple la répartition du trafic en fonction du type de cellules.

Une procédure de handover comporte de manière classique une étape de mesure, dans laquelle une station mobile et une station de base au moins effectuent régulièrement des mesures radio relatives à des conditions de propagation, descendantes (mesures au niveau du récepteur du mobile) ou montantes (mesures au niveau du récepteur d'une ou plusieurs stations de base sur des signaux provenant du mobile). Si un canal de communication est établi entre la station mobile et une station de base, les mesures peuvent être effectuées sur ce canal. Ces mesures reflètent notamment le niveau de signal montant et descendant sur la voie radio. Elles peuvent aussi prendre en compte un indicateur de la qualité du lien radio ainsi qu'un indicateur de la distance séparant la station mobile de la station de base. En outre, la station mobile effectue régulièrement des mesures sur les signaux les plus puissants qu'elle reçoit d'un certain nombre de cellules voisines. Dans l'autre sens, les stations de base de ces cellules voisines peuvent aussi effectuer des mesures sur le signal montant.

Ces mesures sont régulièrement transmises à l'entité du système qui gère la procédure de handover. Celle-ci les traite en les moyennant et en évaluant à partir d'algorithmes mathématiques, si elles répondent à un ou plusieurs critères de handover prédéterminés.

Dans les systèmes UMTS, l'entité du système qui gère et exécute la procédure de handover est le contrôleur de réseau radio (RNC, "Radio Network Controller") qui récupère les mesures effectuées par les terminaux au moyen du protocole RRC ("Radio Resource Control") décrit dans la spécification technique TS 25.331, "RRC Protocol Specification", version 6.14.0 publiée en juin 2007 par le 3GPP (3^{rd} Generation Partnership Project), et celles effectuées par les stations de base au moyen du protocole NBAP ("Node B Application Protocol" décrit dans la spécification technique 3G TS 25.433, version 6.14.0, "UTRAN lub Interface NBAP Signalling", publiée en juin 2007 par le 3GPP).

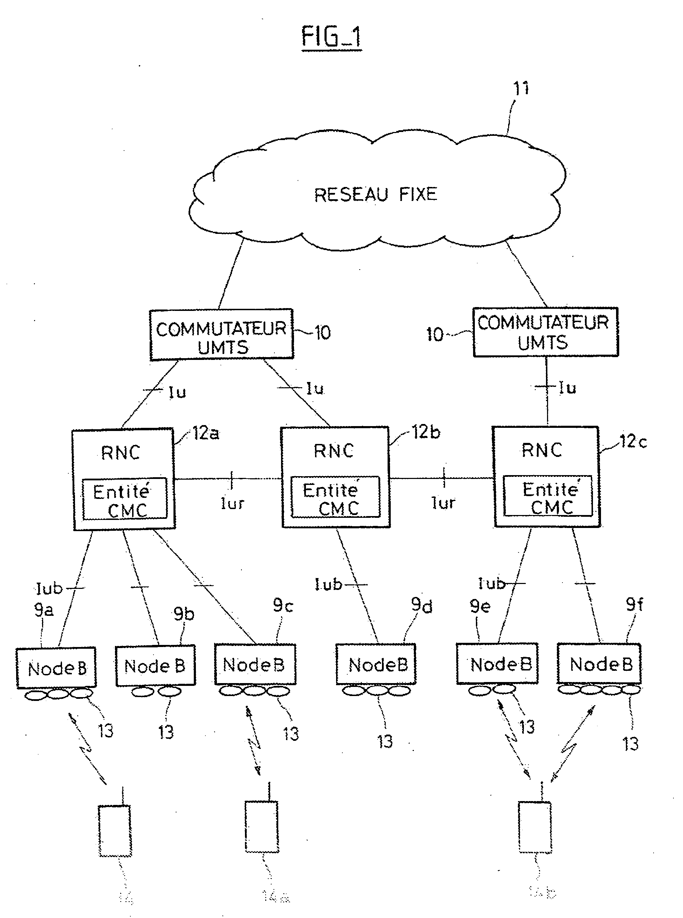

La figure 1 montre un exemple d'architecture de réseau UMTS. Les commutateurs du service mobile 10, appartenant un coeur de réseau (CN, "Core Network"), sont reliés d'une part à un ou plusieurs réseaux fixes 11 et d'autre part, au moyen d'une interface dite *lu,* à des équipements de contrôle 12a, 12b, 12c, ou RNC ("Radio Network Controller"). Chaque RNC 12a, 12b, 12c est relié à une ou plusieurs stations de base 9a-9f au moyen d'une interface dite *lub*. Les stations de base 9a-9t, réparties sur le territoire de couverture du réseau, sont capables de communiquer par radio avec les terminaux mobiles 14, 14a, 14b appelés UE ("User Equipment"). Les stations de base 9a-9f, aussi appelées "node B", peuvent desservir chacune une ou plusieurs cellules au moyen d'émetteurs-récepteurs respectifs 13. Certains RNC 12a, 12b, 12c peuvent en outre communiquer entre eux au moyen d'une interface dite *lur.* Les RNC et les stations de base forment un réseau d'accès appelé UTRAN ("UMTS Terrestrial Radio Access Network").

L'UTRAN comporte des éléments des couches 1 et 2 du modèle ISO en vue de fournir les liaisons requises sur l'interface radio (appelée *Uu*), et un étage 15A de contrôle des ressources radio (RRC) appartenant à la couche 3, ainsi qu'il est décrit dans la spécification technique 3G TS 25.301, "Radio Interface Protocol", version 6.4.0 publiée en mars 2005 par le 3GPP. Vu des couches supérieures, l'UTRAN agit simplement comme relais entre l'UE et le CN.

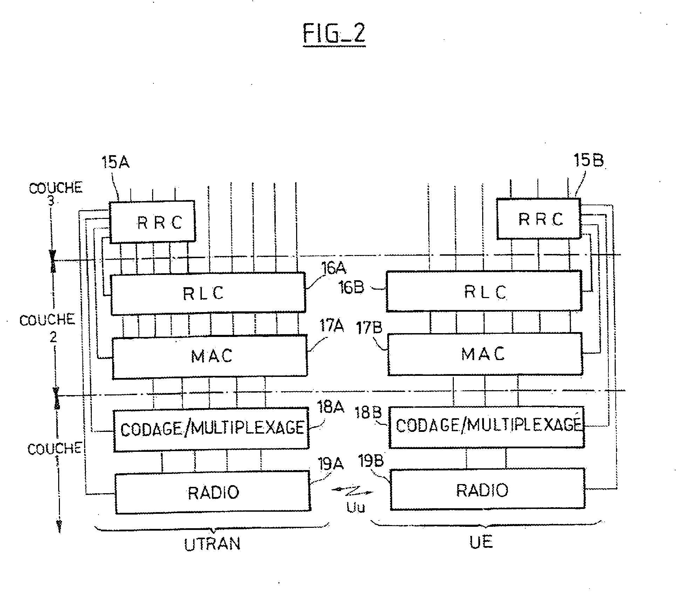

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 6.9.0 publiée en décembre 2006 par le 3GPP). Les étages RRC, RLC et MAC se trouvent dans le RNC 12. La couche 1 se trouve par exemple dans le node B 9. Une partie de cette couche peut toutefois se trouver dans le RNC 12.

Lorsque plusieurs RNC sont impliqués dans une communication avec un UE, il y a généralement un RNC de desserte appelé SRNC ("Serving RNC"), où se trouvent les modules recevant de la couche 2 (RLC et MAC), et au moins un RNC relais appelé DRNC ("Drift RNC") auquel est relié une station de base 9 avec laquelle l'UE est en liaison radio. Des protocoles appropriés assurent les échanges entre ces RNC sur l'interface *lur*, par exemple ATM ("Asynchronous Transfer Mode") et AAL2 ("ATM Adaptation Layer No. 2"). Ces mêmes protocoles peuvent également être employés sur l'interface lub pour les échanges entre un node B et son RNC.

Dans un système UMTS, si les stations de base impliquées dans la procédure de handover dépendent de RNC différents, celle-ci fait intervenir la fonction de gestion du handover (« Connexion Mobility Control ») au sein de chacun des RNCs impliqués. Différents scénarios possibles pour la procédure de transert sont décrits dans la spécification technique 3G TR 25.832, « Manifestations of Handover and SRNS Relocation », version 4.0.0 publiée en mars 2001 par le 3GPP.

On distingue ainsi deux types de handovers dans les systèmes cellulaires; d'une part les handovers de type I, dans lesquels le noeud du réseau d'accès (UTRAN pour un système UMTS) au sein duquel est exécutée la fonction de gestion de la procédure handover (RNC pour un système UMTS) ne change pas au cours ou à l'issue de la procédure de handover, et d'autre part les handovers de type II, dans lesquels le noeud du réseau d'accès (UTRAN pour un système UMTS) au sein duquel est exécutée la fonction de gestion de la procédure handover (RNC pour un système UMTS) change au cours ou à l'issue de la procédure de handover. Les handovers de type II font donc intervenir au moins deux instances de fonction de gestion de la procédure handover, l'une dans le noeud d'accès contrôlant la cellule source du handover, et l'autre dans le noeud du réseau d'accès contrôlant la cellule de destination du handover (aussi appelée « cellule cible »), ce qui implique deux instances mathématiques différentes d'algorithmes de handover (qui sont chacune en général propriétaires au vendeur du noeud) et deux instances différentes de gestion du lien radio (par exemple algorithme d'allocation de ressources au mobile).

Dans un réseau UMTS, les handover de type I sont aussi appelés « intra-RNC handovers », dans la mesure où les cellules source et destination dépendent toutes deux, par l'intermédiaire d'un ou de plusieurs Node-B, d'un même RNC, le RNC étant le noeud UTRAN qui incorpore la fonction de gestion de la procédure handover et les algorithmes correspondant. Les handovers de type II sont appelés « inter-RNC handovers », du fait que la cellule source et la cellule destination dépendent d'un RNC différent, et sont donc gérées par des fonctions de gestion de la procédure handover distinctes ainsi que les algorithmes correspondants.

Le document WO 01/39525 divulgue un procédé par lequel des paramètres d'algorithmes d'optimisation sont transfèrés d'un noeud RNC source vers un RNC cible dans le cas d'un handover inter-RNC.

En se référant à l'UTRAN illustré sur la figure 1, une mobilité du terminal mobile 14 entre les cellules du Node-B 9a, ou entre les cellules des Node-Bs 9a, 9b et 9c serait de type I. Une mobilité du terminal mobile 14a d'une des cellules du Node-B 9c vers une des cellules du Node-B 9d fournit un exemple de handover de type II. Ce handover ferait intervenir l'entité CMC de gestion de handover au sein du RNC source 12a ainsi que l'entité correspondante au sein du RNC destination 12b.

On considère usuellement que les handovers type I sont plus efficaces que ceux de type II étant donné que lorsqu'un terminal mobile effectue plusieurs changements de cellule consécutifs, les cellules impliquées dépendant toutes d'un même noeud de réseau d'accès, et l'ensemble de ces changements de cellule est traité par la même entité de gestion de la procédure handover, qui traite donc chaque handover selon un même algorithme, de même que le nouveau lien est géré avec le même algorithme d'allocation de ressources. Les différentes caractéristiques et performances de l'algorithme de gestion de la procédure handover et de celui d'allocation de ressources peuvent donc être pleinement exploitées et efficacement optimisées. A l'inverse, les handovers de type II peuvent faire intervenir des noeuds de réseau d'accès différents (potentiellement fournis à l'opérateur de réseau par des fournisseurs d'infrastructure différents) au sein desquels s'exécuteront une instance de tâche de traitement de la procédure de handover, potentiellement selon des algorithmes respectifs de gestion de la procédure de handover ou d'allocation de ressources différents entre la source et la destination. Dans l'exemple précédent, l'entité CMC au sein du RNC source 12a peut exécuter un algorithme de gestion de handover différent de celui exécuté par l'entité CMC au sein du RNC de destination 12b.

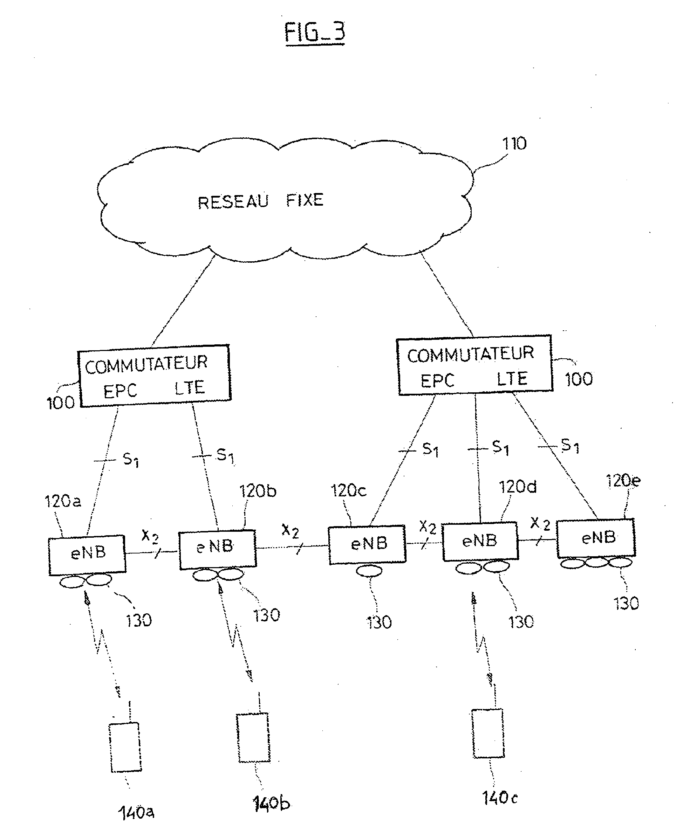

La figure 3 montre un exemple d'architecture de réseau LTE. Les commutateurs du service mobile 100, appartenant un coeur de réseau (EPC, "Evolved Packet Core"), sont reliés d'une part à un ou plusieurs réseaux fixes 110 et d'autre part, au moyen d'une interface dite *S1*, à des stations de base terminaux mobiles 140, 140a, 140b appelés UE ("User Equipment"). On peut considérer schématiquement que les fonctions d'un Node-B et d'un RNC dans l'architecture d'un réseau d'accès UMTS (UTRAN) ont été intégrées au sein de la station de base LTE 120a-120e. Les stations de base 120a-120e, peuvent par ailleurs desservir chacune une ou plusieurs cellules au moyen d'émetteurs-récepteurs respectifs 130. Elles forment un réseau d'accès appelé E-UTRAN (« Evolved UTRAN »).

La question de l'efficacité de la gestion des handovers de type Il dans un réseau d'accès LTE se révèle cruciale du fait qu'il est prévu de n'avoir que deux à trois cellules gérées par une station de base eNB 120. Ainsi, près d'un tiers des handovers pourrait être de type 11, et il est donc souhaitable d'améliorer la procédure de handover de type Il.

Un but de la présente invention est de répondre à ce besoin, L'invention propose ainsi un procédé de contrôle du changement de ressources radio affectées à un terminal mobile en communication dans un système cellulaire, le système cellulaire comprenant un réseau d'accès radio comprenant des premier et second noeuds d'accès radio, le second noeud d'accès radio étant apte à exécuter un algorithme de gestion des ressources radio affectées au terminal mobile. Le procédé comprend une étape de définition d'une condition d'envoi par le premier noeud d'accès radio d'une information relative à un paramétrage d'un algorithme de gestion des ressources radio, une étape de détermination de la réalisation de ladite condition, et une étape d'envoi par le premier noeud d'accès radio au second noeud d'accès radio d'une information relative à un paramétrage d'un algorithme de gestion des ressources radio affectées au terminal mobile exécutable par le second noeud d'accès radio.

Avantageusement, l'information relative à un paramétrage d'un algorithme de gestion des ressources radio envoyée au second noeud d'accès radio comprend une valeur de paramètre pour l'exécution de l'algorithme de gestion des ressources radio affectées au terminal mobile.

D'autre part, l'algorithme de gestion des ressources radio peut comprendre un algorithme de gestion de changement de ressources radio et/ou un algorithme d'allocation des ressources radio.

Dans un mode de réalisation de invention, le premier noeud d'accès radio est apte à exécuter un algorithme de gestion des ressources radio affectées au terminal mobile, et l'information relative à un paramétrage d'un algorithme de gestion des ressources radio envoyée au second noeud d'accès radio est en outre relative à un paramétrage d'un algorithme de gestion des ressources radio exécutable par le premier noeud d'accès radio. Dans ce cas de figure, l'algorithme de gestion des ressources radio exécutable aux premier et second noeuds d'accès radio peut également comprendre un algorithme de gestion de changement de ressources radio et/ou un algorithme d'allocation des ressources radio. D'autre part, l'information relative un paramétrage d'un algorithme de gestion des ressources radio envoyée au second noeud d'accès radio peut dans ce mode de réalisation aussi comprendre un ensemble de valeurs de paramètres d'exécution, aux premier et second noeuds d'accès radio, d'un algorithme de gestion des ressources radio affectées au terminal mobile.

L'invention propose également un dispositif de contrôle de réseau d'accès radio dans un système cellulaire de radiocommunication, le réseau d'accès radio comprenant un noeud d'accès radio apte à exécuter un algorithme de gestion des ressources radio affectées à un terminal mobile en communication. Le dispositif selon invention comprend des moyens pour définir une condition d'envoi d'une information relative à un paramétrage d'un algorithme de gestion des ressources radio, des moyens pour déterminer la réalisation de ladite condition, et des moyens pour envoyer au noeud d'accès radio une information relative à un paramétrage d'un algorithme de gestion des ressources radio affectées au terminal mobile exécutable par le noeud d'accès radio.

Avantageusement, les moyens pour envoyer au noeud d'accès radio une information relative à un paramétrage d'un algorithme de gestion des ressources radio affectées au terminal mobile exécutable par le noeud d'accès radio sont agencés pour envoyer une information qui comprend une valeur de paramètre pour l'exécution d'un algorithme de gestion des ressources radio affectées au terminal mobile.

En outre, les moyens pour envoyer au noeud d'accès radio une information relative à un paramétrage d'un algorithme de gestion des ressources radio affectées au terminal mobile exécutable par le noeud d'accès radio peuvent être agencés pour envoyer une information relative à un paramétrage d'un algorithme de gestion de changement de ressources radio et/ou un algorithme d'allocation des ressources radio.

Dans un mode de réalisation, le dispositif comprend en outre des moyens pour exécuter un algorithme de gestion des ressources radio affectées au terminal mobile, et les moyens pour envoyer au noeud d'accès radio une information relative à un paramétrage d'un algorithme de gestion des ressources radio affectées au terminal mobile exécutable par le noeud d'accès radio sont agencés pour envoyer une information qui est en outre relative à un paramétrage d'un algorithme de gestion des ressources radio exécutable par lesdits moyens pour exécuter un algorithme de gestion des ressources radio affectées au terminal mobile. Les moyens pour exécuter un algorithme de gestion des ressources radio affectées au terminal mobile peuvent par ailleurs être agencés pour exécuter un algorithme de gestion de changement de ressources radio et/ou un algorithme d'allocation des ressources radio. Enfin, le dispositif peut comprendre en outre des moyens de gestion des ressources radio affectées au terminal mobile aptes à générer des données pour constituer l'information relative un paramétrage d'un algorithme de gestion des ressources radio transmise au noeud d'accès radio.

Ce dispositif de contrôle de réseau d'accès radio selon l'invention peut avantageusement être intégré dans une station de base (eNode-B) d'un réseau d'accès LTE, ou bien un contrôleur de réseau radio (RNC) d'un réseau d'accès UMTS.

L'invention propose également un dispositif de contrôle de réseau d'accès radio dans un système cellulaire de radiocommunication, comprenant des moyens pour exécuter un algorithme de gestion des ressources radio affectées à un terminal mobile, des moyens pour recevoir un message transmis par un noeud d'accès radio du réseau d'accès radio et portant une information relative à un paramétrage d'un algorithme de gestion des ressources radio, et des moyens pour commander l'exécution d'un algorithme de gestion des ressources radio en utilisant l'information reçue. Les moyens pour exécuter un algorithme de gestion des ressources radio affectées à un terminal mobile peuvent être agencés pour exécuter un algorithme de gestion de changement de ressources radio et/ou un algorithme d'allocation des ressources radio et les moyens pour commander l'exécution d'un algorithme de gestion des ressources radio en utilisant l'information reçue agencés pour commander l'exécution d'un algorithme de gestion de changement de ressources radio et/ou d'un algorithme d'allocation des ressources radio en utilisant l'information reçue. D'autre part, les moyens pour recevoir un message transmis par un noeud d'accès radio du réseau d'accès radio et portant une information relative à un paramétrage d'un algorithme de gestion des ressources radio peuvent être agencés pour recevoir un message transmis par un noeud d'accès radio du réseau d'accès radio et portant une valeur de paramètre pour l'exécution d'un algorithme de gestion des ressources radio affectées au terminal mobile et/ou pour recevoir un message transmis par un noeud d'accès radio du réseau d'accès radio et portant un ensemble de valeurs de paramètres d'exécution d'un algorithme de gestion des ressources radio, et les moyens pour commander l'exécution d'un algorithme de gestion des ressources radio en utilisant l'information reçue agencés pour commander l'exécution d'un algorithme de gestion des ressources radio en utilisant ladite valeur de paramètre reçue et/ou l'ensemble de valeurs de paramètres d'exécution reçu, respectivement.

Ce dispositif de contrôle de réseau d'accès radio selon l'invention peut aussi avantageusement être intégré dans une station de base (eNode-B) d'un réseau d'accès LTE, ou bien un contrôleur de réseau radio (RNC) d'un réseau d'accès UMTS.

L'invention propose enfin un programme d'ordinateur chargeable dans une mémoire associée à un processeur, et comprenant des instructions pour la mise en oeuvre d'un procédé tel que défini ci-dessus lors de l'exécution dudit programme par le processeur, ainsi qu'un support informatique sur lequel est enregistré ledit programme.

D'autres particularités et avantages de la présente invention apparaîtront dans la description ci-après d'exemples de réalisation non limitatifs, en référence au dessin annexé, dans lequel;
- la figure 1, précédemment commentée, est un schéma d'un réseau UMTS auquel invention peut s'appliquer ;
- la figure 2, précédemment commentée, est un diagramme montrant l'organisation en couches de protocoles de communication employés sur l'interface radio du réseau UMTS ;
- la figure 3, précédemment commentée, est un schéma d'un réseau LTE auquel l'invention peut s'appliquer ;
- la figure 4 est un diagramme montrant la procédure de préparation de handover dans un réseau LTE ;
- La figure 5 est un schéma d'architecture de station de base (eNodeB) d'un réseau d'accès radio LTE auquel l'invention peut s'appliquer.

L'invention est décrite ci-après dans son application à un réseau LTE.

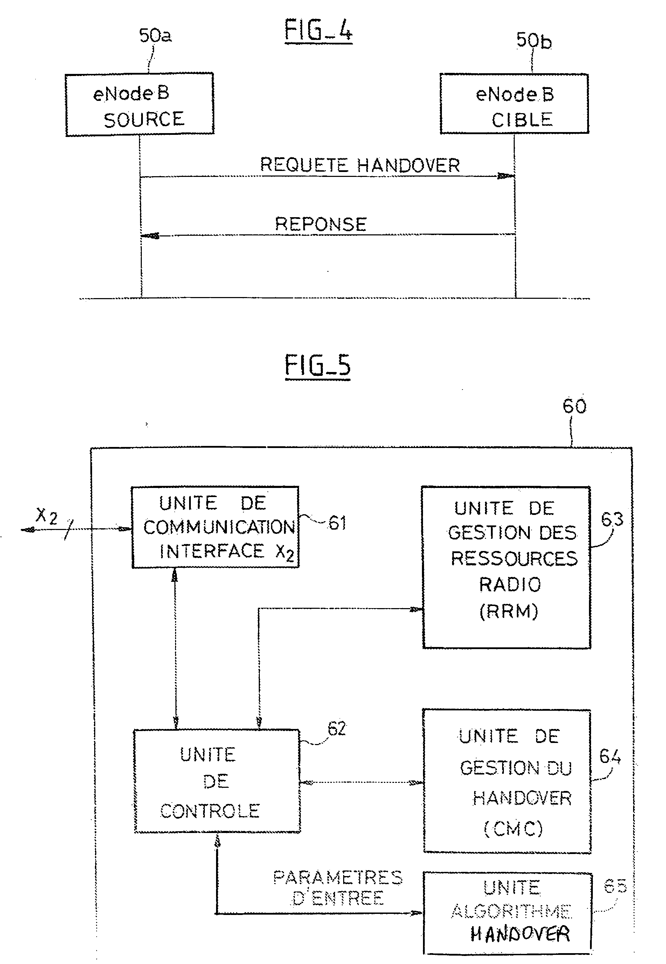

Cette application est illustrée entre autres par la figure 4, qui montre un exemple de procédure de handover entre deux eNodeB telle que définie dans la spécification TS 36.423 v0.1.0, « Evolved Universal Terrestrial Radio Access Network (EUTRAN); X2 Application Protocol (X2AP) », publiée par le 3GPP en juin 2007. La figure 4 illustre la procédure de préparation de handover d'une communication entre deux eNodeB 50a, 50b. Un premier eNodeB 50a, dit eNodeB source, envoie à un second eNodeB 50b, dit eNodeB cible, un message de requête de handover (« HANDOVER REQUEST »). L'envoi de ce message initie la procédure de préparation de handover entre les deux eNodeBs 50a, 50b. Si l'eNodeB cible 50b accepte l'accomplissement du handover, il envoie au eNodeB source 50a un message indiquant que la requête de handover a été traitée avec succès (« HANDOVER REQUEST ACKNOWLEDGE »). Dans les autres cas de figure, il renvoie à l'eNodeB source un message d'échec (« HANDOVER PREPARATION FAILURE »).

L'interface logique X2 entre deux eNodeBs se décompose selon un plan utilisateur (« user plane ») pour le traitement des données utilisateur entre deux eNodeBs, et un plan de signalisation (« control plane ») pour l'échange des données de signalisation entre deux eNodeBs. L'architecture de protocoles de l'interface X2 comprend par ailleurs deux couches fonctionnelles, une couche de réseau radio (« radio network layer ») et une couche de réseau de transport (« transport network layer »), présentes dans le plan de signalisation. La couche de réseau radio du plan de signalisation définit les procédures relatives à l'interaction entre deux eNodeBs. La couche de réseau de transport fournit les services pour le plan utilisateur et pour le transport de signalisation. Dans le plan de signalisation, la couche de réseau radio comporte principalement une couche de protocole appelé X2-AP («X2 Application protocol »). Les messages HANDOVER REQUEST, HANDOVER REQUEST ACKNOWLEDGE et HANDOVER PREPARATION FAILURE décrit précédemment sont des messages du protocole X2-AP. La couche de réseau de transport comporte quant à elle dans le plan de signalisation des éléments de couche 1 à 4 du modèle ISO : couche physique, couche liaison de données, ainsi qu'un étage couche IP et un étage SCTP couche de transport (Stream Control Transmission Protocol) ce dernier étage assurant l'interface avec la couche X2-AP de la couche réseau radio.

La figure 5 présente un exemple d'architecture de station de base eNodeB 60 auquel l'invention peut s'appliquer. Les opérations de l'eNodeB 60 sont supervisées par une unité de contrôle 62, qui communique avec une unité de communication interface X2 61, une unité de gestion des ressources radio (Radio Resource Management. RRM) 63, une unité de gestion du handover (Connexion Mobility Control, CMC) 64, ainsi qu'une unité algorithme handover 65. L'unité de gestion des ressources radio effectue les mesures nécessaires à la gestion de la procédure de handover ainsi que l'allocation ou la suppression des ressources allouées à un équipement utilisateur UE. Comme indiqué précédemment, les mesures ainsi effectuées génèrent un ensemble d'informations qui aident à la décision et la mise en oeuvre de la procédure de handover. La décision de l'engagement d'une procédure de handover pour un équipement utilisateur donné est prise par l'unité de gestion du handover 64, à l'aide des informations fournies par l'unité de gestion des ressources radio 63.

Dans un mode de réalisation de invention, l'unité de gestion du handover 64 est configurée de telle sorte que la décision de déclenchement d'une procédure de handover lorsque l'eNodeB 60 est un eNodeB source pour la procédure de handover remplisse une condition d'envoi par l'eNodeB 60 à l'eNodeB cible d'une information relative à un paramétrage d'un algorithme de gestion des ressources radio. L'information envoyée peut être relative à un paramétrage de l'algorithme de gestion du handover de l'eNodeB cible, et/ou à un paramétrage de l'algorithme d'allocation de ressources radio de l'eNodeB cible, L'information de paramétrage peut d'autre part par exemple consister en des données provenant de l'unité de gestion des ressources radio 63, et communiquées à l'unité de gestion du handover en support à la procédure de handover. L'unité de gestion du handover 64 génère l'envoi par l'unité de communication interface X2 61 d'un message X2-AP vers l'eNodeB destination du handover. Il peut s'agir par exemple d'un message X2-AP de requête de handover (« HANDOVER REQUEST »), ou de tout autre message susceptible de porter l'information relative à un paramétrage d'un algorithme de gestion des ressources radio à envoyer à l'eNodeB cible sur une interface de communication entre l'eNodeB source et l'eNodeB destination. Autrement dit, l'exemple de réalisation de l'invention n'est pas limité par la définition actuelle de l'interface X2 ou des messages X2-AP. Dans un mode particulier de réalisation de l'invention dans lequel le message HANDOVER REQUEST est envoyé, ce message contient, outre les éléments d'information (IE) décrits au paragraphe 9.1.1, de la spécification technique TS 36.423 précédemment citée, un élément d'information comportant l'information relative à un paramétrage d'un algorithme de gestion des ressources radio de l'eNodeB cible. Dans un exemple particulier de réalisation de l'invention, l'unité de gestion du handover 64 génère un message de requête de handover comprenant un élément d'information appelé HANDOVER SPECIFIC CONTAINER qui regroupe ces données provenant de l'unité de gestion des ressources radio 63 et destinées à être utilisées comme paramètres d'entrée de l'algorithme de d'allocation de ressources radio de l'eNodeB cible ou directement comme paramètres d'entrée de l'algorithme de handover géré par l'eNodeB cible (unité de gestion de la procédure de handover).

Lorsque l'eNodeB 60 est un eNodeB cible pour la procédure de handover, il reçoit par l'intermédiaire de l'unité de transmission interface X2 une requête de handover. Ce message est transmis pour traitement à l'unité de gestion du handover 64, qui en extrait les informations relatives à un paramétrage de l'algorithme de gestion du handover de l'unité algorithme handover 65. Ces informations sont alors traitées pour constituer le jeu de paramètres d'entrée fournis à l'unité algorithme handover 65 à l'occasion de l'appel de procédure handover. L'exécution de l'algorithme de handover peut donc bénéficier de paramètres d'entrée constitués au moins en partie à partir d'informations de paramétrage reçues de l'eNodeB source.

Dans un autre mode de réalisation de l'invention lorsque l'eNodeB 60 est un eNodeB cible pour la procédure de handover, il reçoit par l'intermédiaire de l'unité de transmission interface X2 une requête de handover. Ce message est transmis pour traitement à l'unité de gestion du handover 64, qui en extrait les informations relatives à un paramétrage de l'algorithme d'allocation des ressources radio de l'unité de gestion des ressources radio 63. Ces informations sont alors traitées pour constituer le jeu de paramètres d'entrée fournis à l'unité de gestion des ressources radio 63 à l'occasion de l'appel d'une procédure d'allocation de ressources, L'exécution de l'algorithme d'allocation de ressources peut donc bénéficier de paramètres d'entrée constitués au moins en partie à partir d'informations de paramétrage reçues de l'eNodeB source.

Dans un autre mode de réalisation de l'invention, on considère d'autres informations relatives à l'identification de l'algorithme de handover exécuté par l'unité algorithme handover 65 ou celle de l'algorithme d'allocation de ressources exécuté par l'unité de gestion des ressources radio 63. Dans le cas où l'eNodeB 60 est un eNodeB source pour la procédure de handover, l'unité de gestion du handover 64 peut disposer de données relatives à la configuration des eNodeB voisins, susceptibles d'être eNodeB cible dans une procédure de handover. Ces données peuvent par exemple être consignées dans une table en mémoire. Elles peuvent comprendre une information relative au constructeur de l'eNodeB, au type d'algorithme de handover implémenté, au type d'algorithme d'allocation de ressources imptémenté, et/ou à la version logicielle de ces algorithmes. Ainsi, l'eNodeB source peut savoir préalablement à l'envoi d'un message comprenant une information relative à un paramétrage d'un algorithme de gestion de changement de ressources radio si l'eNodeB cible provient ou non du même constructeur et implémente le même algorithme de gestion du handover ou le même algorithme d'allocation de ressources. Si tel est le cas, ou parfois quand bien même la version n'est peut-être pas la même que celle de l'algorithme exécuté dans l'eNodeB source, les paramètres d'entrée de chaque algorithme seront sensiblement identiques dans leur nature. Si les algorithmes et leurs versions s'avèrent identiques, les informations de paramétrage envoyées par l'eNodeB source coïncideront avec les paramètres d'entrée requis par l'algorithme de handover exécuté dans l'eNodeB cible ou les paramètres d'entrée requis par l'algorithme d'allocation des resources. Ces informations permettent donc d'ajuster la constitution de l'information envoyée vers l'eNodeB cible. Elles peuvent être obtenues par l'eNodeB 60 en interrogeant les eNodeB voisins, ou bien fournies à l'eNodeB 60 en données de configuration.

Dans ce mode de réalisation de l'invention, l'envoi par l'eNodeB source d'une information relative à un paramétrage d'un algorithme de gestion des ressources radio n'est pas nécessairement systématique dès lors qu'une décision de déclenchement de la procédure de handover est prise par un eNodeB source. La condition d'envoi d'une information relative à un paramétrage d'un algorithme de gestion des ressources radio comprend en outre des conditions relatives aux données sur la configuration de l'eNodeB cible dont dispose l'eNodeB source. Ainsi, si l'eNodeB source et l'eNodeB cible proviennent de constructeurs différents, l'envoi par l'eNodeB source d'une information relative à un paramétrage d'un algorithme de gestion des ressources radio pourra s'avérer d'une efficacité assez faible, dans la mesure où l'information transmise se sera peut-être pas pleinement exploitable par les algorithmes implémentés à l'eNodeB cible, De fait, dans cet autre mode de réalisation de l'invention, l'envoi d'une information relative à un paramétrage d'un algorithme de gestion des ressources radio est conditionné par la vérification préalable que l'information à transmettre est compatible avec les algorithmes de gestion des ressources radio (par exemple algorithme de gestion de changement de ressources radio, ou algorithme d'allocation de ressources) implémentés dans l'eNodeB cible, ou bien exploitable par au moins l'un de ces algorithmes.

## Revendications

1. Procédé de contrôle du changement de ressources radio affectées à un terminal mobile en communication dans un système cellulaire, le système cellulaire comprenant un réseau d'accès radio comprenant des premier et second noeuds d'accès radio, le second noeud d'accès radio étant apte à exécuter un algorithme de gestion des ressources radio affectées au terminal mobile, le procédé comprenant les étapes suivantes :
- définition d'une condition d'envoi par le premier noeud d'accès radio d'une information relative à un paramétrage d'un algorithme de gestion des ressources radio comprenant un algorithme de gestion de changement de ressources radio et/ou un algorithme d'allocation des ressources radio, la définition de la condition d'envoi comprenant la prise en compte d'informations relatives à l'identification de l'algorithme de gestion de changement de ressources radio ou de l'algorithme d'allocation des ressources radio;
- détermination de la réalisation de ladite condition ;
- envoi par le premier noeud d'accès radio au second noeud d'accès radio d'une information relative à un paramétrage d'un algorithme de gestion des ressources radio affectées au terminal mobile exécutable par le second noeud d'accès radio.

2. Procédé selon la revendication 1, dans lequel l'information relative à un paramétrage d'un algorithme de gestion des ressources radio envoyée au second noeud d'accès radio comprend une valeur de paramètre pour l'exécution de l'algorithme de gestion des ressources radio affectées au terminal mobile.

3. Procédé selon l'une quelconque des revendications précédentes, dans lequel le premier noeud d'accès radio est apte à exécuter un algorithme de gestion des ressources radio affectées au terminal mobile, et dans lequel l'information relative à un paramétrage d'un algorithme de gestion des ressources radio envoyée au second noeud d'accès radio est en outre relative à un paramétrage d'un algorithme de gestion des ressources radio exécutable par le premier noeud d'accès radio.

4. Procédé selon la revendication 3, dans lequel l'algorithme de gestion des ressources radio exécutable aux premier et second noeuds d'accès radio comprend un algorithme de gestion de changement de ressources radio et/ou un algorithme d'allocation des ressources radio.

5. Procédé selon la revendication 3 ou 4, dans lequel l'information relative un paramétrage d'un algorithme de gestion des ressources radio envoyée au second noeud d'accès radio comprend un ensemble de valeurs de paramètres d'exécution, aux premier et second noeuds d'accès radio, d'un algorithme de gestion des ressources radio affectées au terminal mobile.

6. Dispositif de contrôle de réseau d'accès radio dans un système cellulaire de radiocommunication, le réseau d'accès radio comprenant un noeud d'accès radio apte à exécuter un algorithme de gestion des ressources radio affectées à un terminal mobile en communication, comprenant des moyens (64) pour définir une condition d'envoi d'une information relative à un paramétrage d'un algorithme de gestion des ressources radio comprenant un algorithme de gestion de changement de ressources radio et/ou un algorithme d'allocation des ressources radio, la définition de la condition d'envoi comprenant la prise en compte d'informations relatives à l'identification de l'algorithme de gestion de changement de ressources radio ou de l'algorithme d'allocation des ressources radio, des moyens (64) pour déterminer la réalisation de ladite condition, et des moyens (64, 61) pour envoyer au noeud d'accès radio une information relative à un paramétrage d'un algorithme de gestion des ressources radio affectées au terminal mobile exécutable par le noeud d'accès radio.

7. Dispositif selon la revendication 6, dans lequel les moyens (64, 61) pour envoyer au noeud d'accès radio une information relative à un paramétrage d'un algorithme de gestion des ressources radio affectées au terminal mobile exécutable par le noeud d'accès radio sont agencés pour envoyer une information qui comprend une valeur de paramètre pour l'exécution d'un algorithme de gestion des ressources radio affectées au terminal mobile.

8. Dispositif selon l'une quelconque des revendications 6 à 7, comprenant en outre des moyens (65, 63) pour exécuter un algorithme de gestion des ressources radio affectées au terminal mobile, et dans lequel les moyens (64, 61) pour envoyer au noeud d'accès radio une information relative à un paramétrage d'un algorithme de gestion des ressources radio affectées au terminal mobile exécutable par le noeud d'accès radio sont agencés pour envoyer une information qui est en outre relative à un paramétrage d'un algorithme de gestion des ressources radio exécutable par lesdits moyens (65) pour exécuter un algorithme de gestion des ressources radio affectées au terminal mobile.

9. Dispositif selon la revendication 8, dans lequel les moyens (65, 63) pour exécuter un algorithme de gestion des ressources radio affectées au terminal mobile sont agencés pour exécuter un algorithme de gestion de changement de ressources radio et/ou un algorithme d'allocation des ressources radio.

10. Dispositif selon l'une des revendications 6 à 9, comprenant en outre des moyens (63) de gestion des ressources radio affectées au terminal mobile aptes à générer des données pour constituer l'information relative un paramétrage d'un algorithme de gestion des ressources radio transmise au noeud d'accès radio.

11. Station de base d'un réseau de radiocommunication LTE, comprenant un dispositif selon l'une quelconque des revendications 6 à 10.

12. Contrôleur de réseau radio d'un réseau de radiocommunication UMTS, comprenant un dispositif selon l'une quelconque des revendications 6 à 10.

13. Programme d'ordinateur, chargeable dans une mémoire associée à un processeur, et comprenant des instructions pour la mise en oeuvre d'un procédé selon l'une quelconque des revendications 1 à 5 lors de l'exécution dudit programme par le processeur.

14. Support informatique sur lequel est enregistré un programme selon la revendication 13.

## Claims

1. A method for controlling the change in the radio resources assigned to a communicating mobile terminal within a cellular system, the cellular system comprising a radio access network comprising first and second radio access nodes, the second radio access node being capable of executing an algorithm for managing radio resources assigned to the mobile terminal, which method comprises the following steps:
- defining a send condition under which the first radio access node sends information relating to configuration of an algorithm for managing radio resources comprising an algorithm for managing radio resources changes and/or an algorithm for allocating radio resources, the defining of the send condition comprising taking into account information relating to the identification of the algorithm for managing radio resources changes or of the algorithm for allocating radio resources;
- determining whether said condition has been met;
- sending, by the first radio access node to the second radio access node, information relating to a configuration of an algorithm for managing radio resources assigned to the mobile terminal, which is executable by the second radio access node.

2. A method according to claim 1, wherein information relating to a configuration of an algorithm for managing radio resources that was sent to the second radio access node comprises a parameter value for executing the algorithm for managing radio resources assigned to the mobile terminal.

3. A method according to one of the preceding claims, wherein the first radio access node is capable of executing an algorithm for managing radio resources assigned to the mobile terminal, and wherein information relating to a configuration of an algorithm for managing radio resources that is sent to the second radio access node relates in addition to a configuration of an algorithm for managing radio resources which is executable by the first radio access node.

4. A method according to claim 3, wherein the algorithm for managing radio resources which is executable by the first and second radio access nodes comprises an algorithm for managing radio resources changes and/or an algorithm for allocating radio resources.

5. A method according to claim 3 or 4, wherein information relating to a configuration of an algorithm for managing radio resources that is sent to the second radio access node comprises a set of parameter values for executing, within the first and second radio access nodes, an algorithm for managing radio resources assigned to the mobile terminal.

6. A device for controlling a radio access network in a cellular radio communication system, the radio access network comprising a radio access node capable of executing an algorithm for managing radio resources assigned to a communicating mobile terminal, comprising means (64) for defining a send condition for sending information relating to configuration of an algorithm for managing radio resources comprising an algorithm for managing radio resources changes and/or an algorithm for allocating radio resources, the defining of the send condition comprising the taking into account of information relating to the identification of the algorithm for managing radio resources changes or the algorithm for allocating the radio resources, means (64) for determining whether said condition has been met, and means (64, 61) for sending to the radio access node information relating to a configuration of an algorithm for managing radio resources assigned to the mobile terminal that is executable by the radio access node.

7. A device according to claim 6, wherein the means (64, 61) for sending to the radio access node information relating to a configuration of an algorithm for managing radio resources assigned to the mobile terminal that is executable by the radio access node are configured for sending information which comprises a parameter value for executing an algorithm for managing radio resources assigned to the mobile terminal.

8. A device according to any of the claims 6 to 7, further comprising means (65, 63) for executing an algorithm for managing radio resources assigned to the mobile terminal, and wherein the means (64, 61) for sending to the radio access node information relating to configuration of an algorithm for managing radio resources assigned to the mobile terminal that is executable by the radio access node are configured to send information that in addition relates to configuration of an algorithm for managing radio resources that is executable by said means (65) for executing an algorithm for managing radio resources assigned to the mobile terminal.

9. A method according to claim 8, wherein the means (65, 63) for executing an algorithm for managing radio resources assigned to the mobile terminal are configured to execute an algorithm for managing radio resources changes and/or an algorithm for allocating radio resources.

10. A device according to any of the claims 6 to 9, further comprising means for managing radio resources assigned to the mobile terminal, capable of generating data to constitute information relating to configuration of an algorithm for managing radio resources that is transmitted to the radio access node.

11. An LTE radio communication base station, comprising a device according to any one of the claims 6 to 10.

12. A radio network controller of a UMTS radio communication network, comprising a device according to any one of the claims 6 to 10.

13. A computer program, which may be loaded into a memory associated with a processor, comprising instructions for implementing a method according to any one of the claims 1 to 5 when said program is executed by the processor.

14. A data-processing medium on which is recorded a program according to claim 13.

## Patentansprüche

1. Verfahren zum Steuern des Wechsels der einem mobilen Endgerät zugeteilten Funkressourcen in einem zellularen System, wobei das zellulare System ein Funkzugangsnetzwerk mit einem ersten und einem zweiten Funkzugangsknoten umfasst, wobei der zweite Funkzugangsknoten dazu ausgelegt ist, einen Algorithmus zur Verwaltung der dem mobilen Endgerät zugeteilten Funkressourcen auszuführen, wobei das Verfahren die folgenden Schritte umfasst:
- Definieren einer Bedingung für das Senden, durch den ersten Funkzugangsknoten, einer Information in Bezug auf eine Parametrierung eines Funkressourcen-Verwaltungsalgorithmus einschließlich eines Verwaltungsalgorithmus für den Wechsel von Funkressourcen und/oder eines Algorithmus für die Zuteilung der Funkressourcen, wobei das Definieren der Bedingung für das Senden die Berücksichtigung von Informationen in Bezug auf die Identifizierung des Funkressourcenwechsel-Verwaltungsalgorithmus oder des Algorithmus für die Zuteilung der Funkressourcen umfasst;
- Bestimmen der Erfüllung der besagten Bedingung;
- Senden, durch den ersten Funkzugangsknoten an den zweiten Funkzugangsknoten, einer Information in Bezug auf eine Parametrierung eines von dem zweiten Funkzugangsknoten ausführbaren Verwaltungsalgorithmus für die dem mobilen Endgerät zugeteilten Funkressourcen.

2. Verfahren nach Anspruch 1, wobei die an den zweiten Funkzugangsknoten gesendete Information in Bezug auf eine Parametrierung eines Funkressourcen-Verwaltungsalgorithmus einen Parameterwert zur Ausführung des Algorithmus für die Verwaltung der dem mobilen Endgerät zugeteilten Funkressourcen enthält.

3. Verfahren nach einem beliebigen der vorstehenden Ansprüche, wobei der erste Funkzugangsknoten für das Ausführen eines Algorithmus für die Verwaltung der dem mobilen Endgerät zugeteilten Funkressourcen ausgelegt ist, und wobei die an den zweiten Funkzugangsknoten gesendete Information in Bezug auf eine Parametrierung eines Funkressourcen-Verwaltungsalgorithmus sich ebenfalls auf eine Parametrierung eines durch den ersten Funkzugangsknoten ausführbaren Funkressourcen-Verwaltungsalgorithmus bezieht.

4. Verfahren nach Anspruch 3, wobei der an dem ersten und an dem zweiten Funkzugangsknoten ausführbare Funkressourcen-Verwaltungsalgorithmus einen Verwaltungsalgorithmus für den Wechsel von Funkressourcen und/oder einen Algorithmus für die Zuteilung der Funkressourcen umfasst.

5. Verfahren nach Anspruch 3 oder 4, wobei die an den zweiten Funkzugangsknoten gesendete Information in Bezug auf eine Parametrierung eines Funkressourcen-Verwaltungsalgorithmus einen Satz von Ausführungsparameterwerten für das Ausführen, an dem ersten und an dem zweiten Funkzugangsknoten, eines Algorithmus zur Verwaltung der dem mobilen Endgerät zugeteilten Funkressourcen enthält.

6. Vorrichtung zur Steuerung eines Funkzugangsnetzwerks in einem zellularen Funkkommunikationssystem, wobei das Funkzugangsnetzwerk einen Funkzugangsknoten umfasst, welcher dazu ausgelegt ist, einen Algorithmus zur Verwaltung der einem kommunizierenden mobilen Endgerät zugeteilten Funkressourcen auszuführen, wobei die Vorrichtung Mittel (64) zum Definieren einer Bedingung für das Senden einer Information in Bezug auf eine Parametrierung eines Funkressourcen-Verwaltungsalgorithmus einschließlich eines Verwaltungsalgorithmus für den Wechsel von Funkressourcen und/oder eines Algorithmus für die Zuteilung der Funkressourcen, wobei das Definieren der Bedingung für das Senden die Berücksichtigung von Informationen in Bezug auf die Identifizierung des Funkressourcenwechsel-Verwaltungsalgorithmus oder des Algorithmus für die Zuteilung der Funkressourcen umfasst, Mittel (64) zum Bestimmen der Erfüllung der besagten Bedingung, sowie Mittel (64, 61) zum Senden, an den Funkzugangsknoten, einer Information in Bezug auf eine Parametrierung eines von dem Funkzugangsknoten ausführbaren Verwaltungsalgorithmus für die dem mobilen Endgerät zugeteilten Funkressourcen umfasst.

7. Vorrichtung nach Anspruch 6, wobei die Mittel (64, 61) zum Senden, an den Funkzugangsknoten, einer Information in Bezug auf eine Parametrierung eines von dem Zugangsknoten ausführbaren Algorithmus zur Verwaltung der dem mobilen Endgerät zugeteilten Funkressourcen dazu ausgelegt sind, eine Information, welche einen Parameterwert für das Ausführen eines Algorithmus zur Verwaltung der dem mobilen Endgerät zugeteilten Funkressourcen enthält, zu senden.

8. Vorrichtung nach einem beliebigen der Ansprüche 6 bis 7, weiterhin umfassend Mittel (65, 63) zum Ausführen eines Algorithmus zur Verwaltung der dem mobilen Endgerät zugeteilten Funkressourcen, und wobei die Mittel (64, 61) zum Senden, an den Funkzugangsknoten, einer Information in Bezug auf eine Parametrierung eines von dem Zugangsknoten ausführbaren Algorithmus zur Verwaltung der dem mobilen Endgerät zugeteilten Funkressourcen dazu ausgelegt sind, eine Information, welche sich weiterhin auf eine Parametrierung eines von den besagten Mitteln (65) ausführbaren Algorithmus zur Verwaltung der Funkressourcen bezieht, zu senden, um den Algorithmus zur Verwaltung der dem mobilen Endgerät zugeteilten Ressourcen auszuführen.

9. Vorrichtung nach Anspruch 8, wobei die Mittel (65, 63) zum Ausführen eines Algorithmus zur Verwaltung der dem mobilen Endgerät zugeteilten Funkressourcen dazu ausgelegt sind, einen Verwaltungsalgorithmus für den Wechsel von Funkressourcen und/oder einen Algorithmus für die Zuteilung der Funkressourcen auszuführen.

10. Vorrichtung nach einem der Ansprüche 6 ä 9, weiterhin umfassend Mittel (63) zur Verwaltung der dem mobilen Endgerät zugeteilten Funkressourcen, welche dazu ausgelegt sind, Daten für die Zusammenstellung der an den Zugangsknoten übertragenen Information in Bezug auf eine Parametrierung eines Algorithmus zur Verwaltung der Funkressourcen zu erzeugen.

11. Basisstation eines LTE-Funkkommunikationsnetzwerks mit einer Vorrichtung nach einem beliebigen der Ansprüche 6 bis 10.

12. Funknetz-Controller eines UMTS-Funkkommunikationsnetzwerks mit einer Vorrichtung gemäß einem beliebigen der Ansprüche 6 bis 10.

13. Computerprogramm, welches in einen einem Prozessor zugeordneten Speicher geladen werden kann und Befehle für die Durchführung eines Verfahrens gemäß einem beliebigen der Ansprüche 1 bis 5 bei Ausführen des besagten Programms durch den Prozessor umfasst.

14. Datenträger, auf welchem ein Programm gemäß Anspruch 13 gespeichert wird.
